# EUROPÄISCHE PATENTSCHRIFT

(11) **EP 1 411 246 B1**
(45) Veröffentlichungstag und Bekanntmachung des Hinweises auf die Patenterteilung: **28.09.2005**
(21) Anmeldenummer: 03014014.9
(22) Anmeldetag: 21.06.2003
(51) Int. Cl.: F04C 2/10, F04C 15/00, F04C 2/08

(54) **Innenzahnradpumpe mit einem verzahnten Hohlrad und einem damit kämmenden Laufrad**
Internal gear pump with a toothed ring gear and an interacting pinion gear
Pompe à engrenage interne avec une couronne de train planétaire et un pignon interactif

(30) Priorität: 19.10.2002 DE 10248933
(43) Veröffentlichungstag der Anmeldung: 21.04.2004
(73) Patentinhaber: Pumpenfabrik Ernst Scherzinger GmbH & Co. KG, 78120 Furtwangen (DE)
(72) Erfinder: Ebner, Dieter, 78120 Furtwangen (DE)
(74) Vertreter: Maucher, Wolfgang

(56) Entgegenhaltungen:
- DE-A- 3 943 369
- DE-U- 29 913 367
- US-H- H1 966
- PATENT ABSTRACTS OF JAPAN Bd. 0092, Nr. 23 (M-411), 10. September 1985 (1985-09-10) & JP 60 081488 A (HONDA GIKEN KOGYO KK), 9. Mai 1985 (1985-05-09)

## Beschreibung

Die Erfindung betrifft eine Innen-Zahnradpumpe mit wenigstens einem innen verzahnten Hohlrad und mit einem damit kämmenden, außen verzahnten Laufrad, mit oder ohne Sichel, und mit einem elektrischen Antrieb, der dadurch gebildet ist, dass das Hohlrad das Innere eines Rotors eines insbesondere bürstenlosen Elektromotors bildet oder mit dem Rotor verbunden ist und dass diesem Rotor benachbart ein Stator angeordnet ist, wobei das Hohlrad und das Laufrad von einem eine Stirnseite des Laufrads und des Hohlrads mit einem Boden überdeckenden geschlossenen Spalttopf und von dessen gegenüber dem Boden vorstehenden Wandbereich gegenüber dem Stator abgeschirmt ist.

Eine derartige Zahnradpumpe ist aus DE 299 13 367 U1 bekannt und hat sich bewährt. Gegenüber Innen-Zahnradspumpen, bei denen die Abschirmung zwischen dem Hohlrad und dem Stator beispielsweise gemäß DE 41 06 060 C2 oder gemäß US 2 711 286 nur durch ein Rohr bewirkt wird, ergibt sich der Vorteil, dass auch stirnseitig mit ein und demselben Abschirmelement, nämlich mit dem Spalttopf, ein dichter Abschluss erreicht wird.

Bei der bekannten Zahnradpumpe gemäß DE 299 13 367 U1 hat der Spalttopf zu seiner Befestigung an seinem dem Boden abgewandten Randbereich einen Flansch, der an einer Anlagefläche des Gehäuses der Zahnradpumpe innenseitig anliegt und dort befestigt werden muß. Damit an der Stirnseite von Laufrad und Hohlrad kein solcher Spalt bleibt, der einen Verlust bedeuten wurde, muß der Boden dieses Spalttopfs abstandslos stirnseitig anliegen. Dies bedarf einer sehr genauen Fertigung vor allem des Befestigungsflansches, damit nicht versehentlich aufgrund von Toleranzen an den Stirnseiten von Laufrad und Hohlrad ein zu größer Abstand verbleibt oder umgekehrt der Flansch nicht fest genug an seiner Gegenfläche anliegt, so dass dort Undichtigkeiten auftreten könnten. Somit ist eine sehr präzise, also auch teure Fertigung dieses bekannten Spalttopfes erforderlich.

Ferner ist bei dieser vorbekannten Anordnung gemäß DE 299 13 367 U1 vorgesehen, dass der Spalttopf auch das Lager für das Hohlrad bildet oder aufnimmt, so dass dieser Spalttopf in dem Lagerbereich ebenfalls sehr genau gefertigt sein muss.

Es besteht deshalb die Aufgabe, eine Innen-Zahnradpumpe der eingangs genannten Art zu schaffen, bei welcher die Vorteile einer präzisen Lagerung von Hohlrad und Laufrad und eine sichere Abschirmung mit Hilfe eines Spalttopfes erhalten bleiben, der präzise und verlustfrei an der Stirnseite des Hohlrades angeordnet ist, wobei jedoch eine Fertigung mit großzügigeren Toleranzen vor allem des Spalttopfs ermöglicht werden soll.

Zur Lösung dieser scheinbar widersprüchlichen Aufgabe ist die eingangs definierte Innen-Zahnradpumpe dadurch gekennzeichnet, dass der Spalttopf an seinem dem Boden abgewandten Randbereich flanschlos ist und mit diesem Randbereich eine zu dem Gehäuse der Zahnradpumpe gehörende Zentrierung übergreift und/oder in eine Zentrierung des Gehäuses eingreift und dass der Spalttopf in Gebrauchsstellung mit seinem Boden axial gegen einen Lagerzapfen für das Laufrad und/oder gegen die Sichel, insbesondere planparallel angedrückt ist.

Da der Spalttopf ohne Flansch gefertigt wird, entfällt die bisher erforderliche hohe Präzision bei der Ausbildung eines solchen Flansches. Durch das Andrücken des Bodens des Spalttopfes an die Sichel - sofern eine solche vorhanden ist - und/oder gegen den Lagerzapfen wird außerdem im Bereich der Stirnseiten des Hohlrades und des Laufrades die erforderliche Spielfreiheit im Sinne eines Vermeidens eines zu großen Abstands automatisch hergestellt, so dass das Andrücken eine doppelte Funktion hat, indem es einerseits die erwähnte Spielfreiheit bewirkt und andererseits den Spalttopf in axialer Richtung - trotz des Fehlens eines Flansches - festlegt. Gleichzeitig ist der Spalttopf in radialer Richtung durch die Zentrierung an seinem Randbereich festgelegt, wobei eine Zentrierung mit relativ großen Toleranzen ausreichen kann.

Eine Ausgestaltung von erheblicher Bedeutung kann dabei vorsehen, dass das Gehäuse einen axial nach innen gerichteten, innerhalb des Spalttopfes verlaufenden Zapfen oder Vorsprung aufweist, der von einem das Hohlrad aufweisenden, verzahnungsfreien Innenzylinder drehbar als Lagerstelle übergriffen ist und insbesondere einen axialen Anschlag für das Hohlrad oder seinen Lagerzylinder aufweist. Das Hohlrad kann also mit einem insbesondere einstückig mit ihm verbundenen, in axialer Richtung an ihm angreifenden Zylinder verbunden sein, der auf dem erwähnten Zapfen oder Vorsprung gelagert ist, so dass eine Lagerstelle an der Innenseite des Spalttopfes entfällt.

Zum Andrücken des Spalttopfs an einen Lagerzapfen für das Laufrad und/oder an eine Sichel kann ein mit dem Gehäuse insbesondere lösbar verbindbarer Deckel und/oder ein Zwischenstück zwischen diesem Deckel und der Außenseite des Bodens des Spalttopfs vorgesehen sein. Das Verschließen des Gehäuses mit dem Deckel bewirkt also gleichzeitig auch die Festlegung des Spalttopfs in axialer Richtung und das praktisch spielfreie Andrücken an einen Lagerzapfen oder eine Sichel, so dass auch die Montage vereinfacht ist.

An der Stirnseite des flanschlosen Randbereichs des Spalttopfs kann ein Widerlager, insbesondere ein nachgiebiges Widerlager oder ein Dichtring vorgesehen sein, welches durch das axiale Andrücken des Spalttopfs gleichzeitig zusammendrückbar ist. Somit kann dieses Widerlager, bevorzugt ein Dichtring mit entsprechender zusätzlicher Funktion, nämlich einer Dichtfunktion, eventuelle Toleranzen in axialer Richtung ausgleichen beziehungsweise zulassen, dass der Boden des Spalttopfs ausreichend fest an einen Lagerzapfen des Laufrads und/oder eine Sichel angedrückt wird. Gleichzeitig wird der Randbereich des Spalttopfs abgedichtet.

Eine andere oder eine zusätzliche Ausgestaltung der erfindungsgemäßen Zahnradpumpe kann darin bestehen, dass der Spalttopf an seinem flanschlosen Randbereich ein Gewinde zum Verschrauben mit einer Zentrierung aufweist und dass das Anziehen des Gewindes dieser Verschraubung auch zum Andrücken des Bodens des Spalttopfs an die Stirnseite des Lagerzapfens des Laufrades und/oder an die Stirnseite der Sichel dient. Der flanschlose Spalttopf kann also mit einem gleichzeitig auch der Zentrierung dienenden Gewinde verschraubt werden, was gleichzeitig zu seiner axialen Verstellung führt, bis der Boden an dem Lagerzapfen oder der Sichel mit der gewünschten Kraft anliegt.

Im Randbereich des Spalttopfs kann insbesondere innenseitig ein mit einem Gehäuseabschnitt zusammenwirkender Dichtring vorgesehen sein, beispielsweise benachbart zu einem Zentriergewinde. Anstelle eines an der Stirnseite des Randbereichs des Spalttopfs angreifenden Dichtrings oder zusätzlich zu einem solchen stirnseitigen Dichtring kann also auch noch ein an der Wandung des Spalttopfs nahe dem Rand angreifender Dichtring die Abdichtung bewirken oder verbessern.

Eine vorteilhafte Ausgestaltung der Zahnradpumpe kann vorsehen, dass das die Zentrierung für den Spalttopf aufweisende Teil des Gehäuses mit dem übrigen Gehäuse der Zahnradpumpe lösbar verbunden und austauschbar ist. Vor allem bei einer Anordnung, bei welcher zur Zentrierung ein Zentriergewinde vorgesehen ist, ergibt sich dadurch die Möglichkeit, den Spalttopf zusammen mit der in ihm befindlichen Pumpe, bestehend aus Hohlrad und Laufrad sowie deren Lagerung, schnell und einfach als kompakte Baueinheit auszutauschen, was vor allem in solchen Fällen, in denen die Innenzahnrandpuppe aufgrund des pumpten Mediums einem hohem Verschleiß unterliegt, besonders günstig ist, weil dadurch Ausfallzeiten der Pumpe auf ein Minimum reduziert werden können.

Das die Zentrierung aufweisende Gehäuseteil kann in eine Öffnung des Gehäuses einfügbar und mittels Flansch oder Bajonettverschluss oder Gewinde oder Steckschrauben oder dergleichen mit dem übrigen Gehäuse in Gebrauchsstellung verbunden sein. Die Art der Befestigung des lösbaren Gehäuseteils kann also weitgehend beliebig gewählt werden.

Der Lagerzapfen für das Laufrad kann mit dem das Hohlrad beziehungsweise einen mit dem Hohlrad verbundenen Zylinder lagernden Gehäusevorsprung verbunden, insbesondere einstückig verbunden sein. Dadurch ist es möglich, diesen Lagerzapfen für das Laufrad mit relativ großem Durchmesser zu versehen, so dass sich eine entsprechend große Anlagefläche für den Boden des Spalttopfes an der Stirnseite dieses Lagerzapfens ergibt. Gleichzeitig ergibt sich so ein relativ großflächiges Gleitlager für das Laufrad, welches also eine große Lebensdauer haben kann.

Der Lagervorsprung des Gehäuses für das Laufrad und/oder für das Hohlrad - beziehungsweise für den mit dem Hohlrad verbundenen Lagerzylinder - kann zu den Lagerbereichen führende Kanäle oder Bohrungen für ein Schmiermedium aufweisen. Dadurch ist es möglich, das gepumpte Medium gleichzeitig zur Schmierung der Lagerstellen auszunutzen. Gleichzeitig erweist sich eine einstückige Fertigung dieses Lagervorsprungs als vorteilhaft, weil die entsprechenden Bohrungen und Kanäle sehr einfach und ohne Rücksicht auf eventuell gegenseitig zu verbindende Teile angebracht werden können.

Der flanschlose Spalttopf kann tiefgezogen sein. Da ein Flansch vermieden wird, ist eine derartige preiswerte Fertigung durch Tiefziehen möglich, die außerdem zu einer Verminderung der Wandstärke des Spalttopfs ausgenutzt werden kann, so dass er entsprechend platzsparend untergebracht werden kann und den magnetischen Fluss zwischen Rotor und Stator entsprechend wenig beeinträchtigt.

Die radiale Abmessung der Stirnseite des Spalttopfs kann zumindest bereichsweise der radialen Dicke dieser Wandung entsprechen, also im Randbereich ohne einen Absatz aufhören. Dabei ist es aber ferner möglich, dass die Dicke der Wandung des Spalttopfs mit Abstand zu seinem freien Rand, insbesondere im Bereich des Stators, gegenüber der Wandstärke im randnahen Bereich vermindert ist. Dies kann von vornherein durch den Tiefziehvorgang und/oder aber auch durch Nachbearbeitungen erreicht werden, um vor allem im Bereich der Wicklungen des Stators eine in vorteilhafter Weise möglichst geringe Wandstärke des Spalttopfs zu haben. Gegebenenfalls kann außerdem die Innenseite des Bodens im Bereich seiner Anlage an dem Lagerzapfen und/oder der Sichel sowie im Bereich der Stirnseiten vom Laufrad und Hohlrad zur besseren Abdichtung bearbeitet sein.

Vor allem bei Kombination einzelner oder mehrerer der vorbeschriebenen Merkmale und Maßnahmen ergibt sich eine Innen-Zahnradpumpe der eingangs definierten Art, bei welcher eine preiswerte Fertigung insbesondere des Spalttopfs mit allen Vorteilen eines solchen abschirmenden Spalttopfs möglich ist.

Nachstehend sind Ausführungsbeispiele der Erfindung anhand der Zeichnung näher beschrieben. Es zeigt in zum Teil schematisierter Darstellung:
- Fig. 1: eine Seitenansicht einer erfindungsgemäßen Innen-Zahnradpumpe,
- Fig. 2: einen Längsschnitt der Zahnradpumpe gemäß Fig. 1,
- Fig. 3: einen Querschnitt der Zahnradpumpe gemäß der Schnitt-linie III - III in Fig. 1,
- Fig. 4: im vergrößertem Maßstab einen Längsschnitt analog dem der Fig. 2, wobei die Befestigung des die Lagerung für Hohlrad und Laufrad aufweisenden Gehäuseteils gegenüber Fig. 2 abgewandelt ist, sowie
- Fig. 5: in vergrößertem Maßstab die auswechselbare Einheit aus dem Gehäuseteil mit der Lagerung für Hohlrad und Laufrad und daran zentriertem Spalttopf, die gemäß Fig. 2 auswechselbar ist.

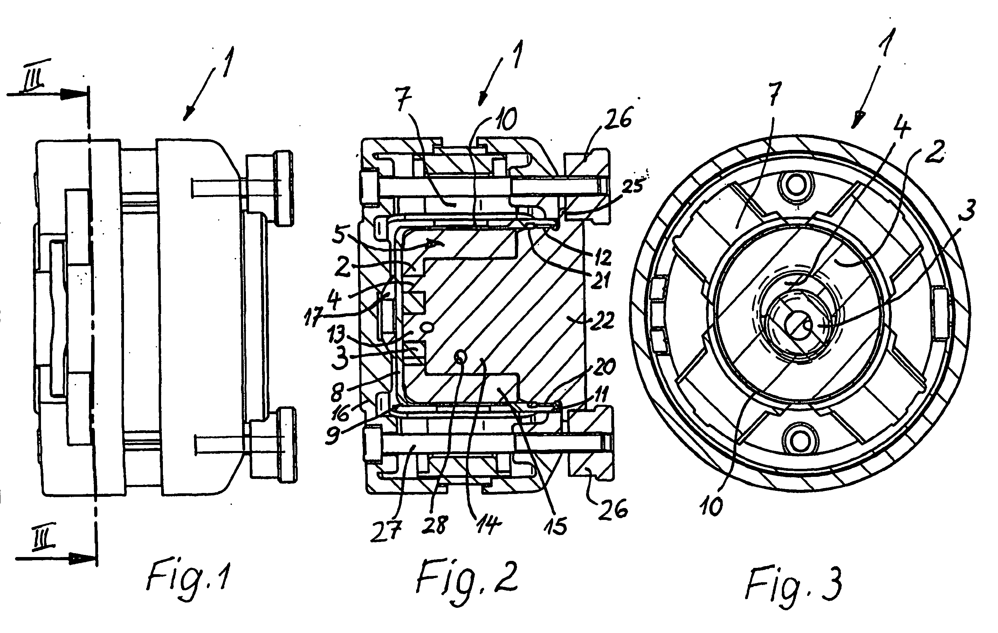

Eine im Ganzen mit 1 bezeichnete Innen-Zahnradpumpe weist ein innenverzahntes Hohlrad 2 und ein damit kämmendes außenverzahntes innerhalb dieses Hohlrades 2 angeordnetes Laufrad 3 sowie gemäß Fig. 2, 3, 4 und 5 eine Sichel 4 auf. Ein elektrischer Antrieb dieser Innen-Zahnradpumpe 1 ist dadurch gebildet, dass das Hohlrad 2 das Innere eines Rotors 5 eines bürstenlosen Elektromotors ist beziehungsweise mit dem Magnete 6 enthaltenden Rotor 5 verbunden ist, wobei diesem Rotor 5 benachbart ein Stator 7 angeordnet ist.

Das Hohlrad 2 und das Laufrad 3 werden von einem eine Stirnseite des Laufrades 3 und des Hohlrades 2 mit einem Boden 8 überdeckenden geschlossenen Spalttopf 9 abgeschirmt, während dessen gegenüber dem Boden 8 hochstehender Wandbereich 10 die Abschirmung zwischen Rotor 5 und Stator 7 bewirkt. Der gesamte Spalttopf 9 umschließt also die wesentlichen mechanischen Teile der Zahnradpumpe 1.

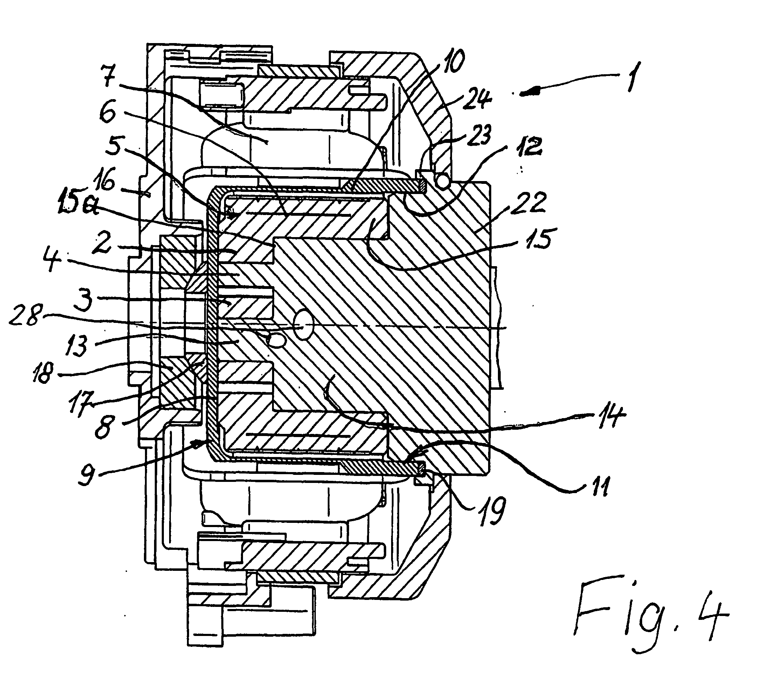

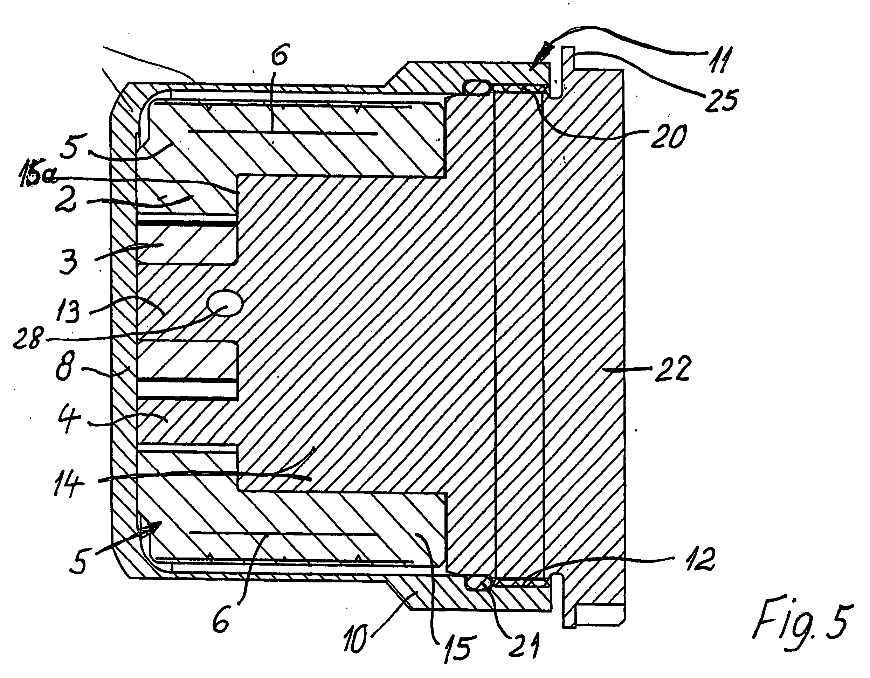

Dabei erkennt man in den Fig. 2 sowie vor allem in den Fig. 4 und 5, dass der Spalttopf 9 an seinem seinem Boden 8 abgewandten Randbereich 11 flanschlos ist und mit diesem Randbereich 11 eine zu dem Gehäuse der Zahnradpumpe 1 gehörende Zentrierung 12 übergreift oder gegebenenfalls auch in eine solche Zentrierung eingreifen könnte.

In noch zu beschreibender Weise ist außerdem der Spalttopf 9 in Gebrauchsstellung mit seinem Boden 8 und dabei mit der Innenseite dieses Bodens 8 axial gegen einen Lagerzapfen 13 für das Laufrad 3 und/oder gegen die Sichel 4 angedrückt, so dass die Zahnradpumpe an den entsprechenden Stirnseiten des Hohlrades 2 und des Laufrades 3 durch den Boden 8 des Spalttopfs 9 abgedichtet ist, aber dennoch bei entsprechender Bemessung von einem eventuell verbleibenden Spalt gut drehbar sind.

In den Fig. 2, 4 und 5 ist dargestellt, dass das Gehäuse einen relativ groß bemessenen, axial nach innen gerichteten, innerhalb des Spalttopfs 9 verlaufenden Zapfen 14 als Lagervorsprung, auch als "Vorsprung 14" bezeichnet, aufweist, der von einem das Hohlrad 2 tragenden, im Ausführungsbeispiel einstückig mit diesem Hohlrad 2 verbundenen verzahnungsfreien Hohlzylinder 15 drehbar als Lagerstelle übergriffen ist und außerdem einen axialen Anschlag 15a für das radial nach innen überstehende Hohlrad 2 oder einen damit eventuell verbundenen Lagerzylinder aufweist. Dabei wird vor allem anhand der Fig. 4 und 5 deutlich, dass dieser Hohlzylinder 15 den größten Teil des die Magnete 6 enthaltenden Rotors 5 bildet, also eine Doppelfunktion hat.

Das schon erwähnte Andrücke des Spalttopfs 9 beziehungsweise seines Bodens 8 an den Lagerzapfen 13 oder die Sichel 4 kann auf unterschiedliche Weise bewirkt werden und führt zu einer planparallelen Anlage der planen Innenseite des Bodens 8 an der entsprechend ebenen Stirnseite des Lagerzapfens 13 und/oder der Sichel 4.

Gemäß Fig. 4 ist für dieses Andrücken des Spalttopfs 9 und seines Bodens 8 ein mit dem Gehäuse lösbar verbindbarer Deckel 16 und ein Zwischenstück 17 zwischen diesem Deckel 16 und der Außenseite des Bodens 8 des Spalttopfs 9 vorgesehen. Dabei ist außerdem in dem Deckel 16 noch ein Druckring 18 angeordnet, der auf die Außenseite des Zwischenstücks 17 wirkt und entweder selbst etwas elastisch nachgiebig sein könnte oder ein etwas elastisches Zwischenstück 17 beaufschlagt.

In diesem Falle ist an der Stirnseite des flanschlosen Randbereichs 11 des Spalttopfs 9 ein nachgiebiges Widerlager 19, welches gleichzeitig als Dichtring wirkt, in einer Ringnut angeordnet, in die die Stirnseite des Randbereichs 11 des Spalttopfs 9 in Gebrauchsstellung etwas eingreift. Durch Andrücken des Spalttopfs 9 wird dieser Widerlagerring 19 etwas zusammengedrückt und kann also in axialer Richtung bestehende Toleranzen ausgleichen.

Gemäß Fig. 2 und 5 kann das Andrücken dadurch geschehen, dass der Spalttopf an seinem flanschlosen Randbereich 11 ein Gewinde 20 zum Verschrauben mit einer in diesem Falle übergriffen Zentrierung 12 aufweist, so dass das Anziehen des Gewindes 20 dieser Verschraubung auch zum Andrücken des Bodens 8 des Spalttopfs 9 an die Stirnseite des Lagerzapfens 13 oder an die Stirnseite der Sichel 4 dient. Ein Andrücken des Spalttopfs 9 mit Hilfe des Deckels 16 und eines Zwischenstücks 17 kann also entfallen. Dabei erkennt man in Fig. 5, dass im Randbereich 11 des Spalttopfs 9 innenseitig ein mit einem Gehäuseabschnitt zusammenwirkender Dichtring 21 vorgesehen ist, der sich dabei benachbart zu dem Zentriergewinde 20 befindet. Somit wird die in Fig. 5 dargestellte Einheit aus den wesentlichen mechanischen Teilen der Zahnradpumpe 1 und dem Spalttopf 9 nach außen abgedichtet.

Das die Zentrierung 12 für den Spalttopf 9 aufweisende Teil 22 gehört zu dem Gehäuse der Zahnradpumpe 1 und ist in beiden Ausführungsbeispielen mit dem übrigen Gehäuse lösbar verbunden und austauschbar.

Während gemäß Fig. 4 dieses Teil 22 an einem Ringvorsprung 23 außenseitig übergriffen und mit einem zweiten Deckel 24 gehalten wird, hat es im Ausführungsbeispiel nach Fig. 2 und 5 einen Flansch 25 oder stattdessen ähnlich ausgebildete radiale Vorsprünge, die mit Muttern 26 übergriffen und mit Durchsteckschrauben 27 (vergleiche Fig. 2) gegenüber dem Deckel 16 fixiert werden und dadurch das Gehäuseteil 22 festlegen.

Somit ist das Gehäuseteil 22 zusammen mit dem Spalttopf 9 und seinem Inhalt auf einfache Weise austauschbar, falls die Zahnradpumpe zum Beispiel verschlissen ist.

Das die Zentrierung 12 aufweisende Gehäuseteil 22 ist gemäß Fig. 2 und 5 also axial in eine entsprechende Öffnung des Gehäuses einfügbar und mittels Flansch 25 oder flanschartigen Vorsprüngen und Steckschrauben 27 mit dem übrigen Gehäuse in Gebrauchsstellung verbunden beziehungsweise verbindbar.

So wie das Hohlrad 2 mit dem Hohlzylinder 15 einstückig verbunden ist, ist im Ausführungsbeispiel auch der Lagerzapfen 13 für das Laufrad 3 mit dem das Hohlrad 2 beziehungsweise dessen Hohlzylinder 15 lagernden Gehäusevorsprung 14 einstückig verbunden. Dadurch wird eine separate Befestigung eines solchen Lagerzapfens 13 vermieden.

In den Fig. 2, 4 und 5 erkennt man, dass der Lagervorsprung oder Zapfen 14 des Gehäuses für das Hohlrad 2 und/oder für das Laufrad 3 zu den Lagerbereichen führende Kanäle 28 oder Bohrungen für ein Schmiermedium aufweist, dass heißt das von der Zahnradpumpe 1 geförderte Medium kann auch zur Schmierung verwendet werden.

Der flanschlose Spalttopf 9 ist zweckmäßigerweise tiefgezogen, was auch deshalb ermöglicht wird, weil er praktisch keine spanende Bearbeitung benötigt, um beispielsweise Lager aufzunehmen. Dabei entspricht die radiale Abmessung der Stirnseite des Spalttopfs 9 im Randbereich zumindest der radialen Dicke der Wandung 10 in diesem Randbereich 11. Mit Abstand zum freien Rand ist die Dicke der Wandung 10 vermindert, so dass im Bereich des Stators 7 dieser dünnere Wandbereich angeordnet ist und den magnetischen Fluss möglichst wenig beeinträchtigt.

Die Innen-Zahnradpumpe 1 mit einem innenverzahnten Hohlrad 2 und einem damit kämmenden, außenverzahnten Laufrad 3, mit oder ohne Sichel, hat einen elektrischen Antrieb, der dadurch gebildet ist, dass das Hohlrad 2 das Innere eines Rotors 5 eines insbesondere bürstenlosen Elektromotors bildet oder mit dem Rotor 5 verbunden ist und dass diesem Rotor 5 benachbart ein Stator 7 angeordnet ist. Das Hohlrad 2 und das Laufrad 3 werden dabei von einem eine Stirnseite des Laufrads 3 und des Hohlrads 2 mit einem Boden 8 überdeckenden geschlossenen Spalttopf 9 gegenüber dem Stator 7 durch den Wandbereich 10 dieses Spalttopfs 9 abgeschirmt. Dieser Spalttopf 9 ist an seinem dem Boden 8 abgewandten Randbereich 11 flanschlos und weist eine Zentrierung insbesondere in diesem Randbereich 11 auf, mit der der Spalttopf 9 seine Gebrauchslage erhält, wobei er gleichzeitig mit seinem Boden 8 axial gegen einen Lagerzapfen 13 für das Laufrad 3 und/oder gegen die Sichel 4, sofern vorhanden, angedrückt ist, dass heißt ein randseitiger Flansch für seine Befestigung wird vermieden.

## Patentansprüche

1. Innen-Zahnradpumpe (1) mit wenigstens einem innen verzahnten Hohlrad (2) und mit einem damit kämmenden, außen verzahnten Laufrad (3), mit oder ohne Sichel (4), und mit einem elektrischen Antrieb, der dadurch gebildet ist, dass das Hohlrad (2) das Innere eines Rotors (5) eines insbesondere bürstenlosen Elektromotors bildet oder mit dem Rotor (5) verbunden ist und dass diesem Rotor (5) benachbart ein Stator (7) angeordnet ist, wobei das Hohlrad (2) und das Laufrad (3) von einem eine Stirnseite des Laufrads (3) und des Hohlrads (2) mit einem Boden (8) überdeckenden geschlossenen Spalttopf (9) und von dessen gegenüber dem Boden (8) vorstehenden Wandbereich (10) gegenüber dem Stator (7) abgeschirmt ist, **dadurch gekennzeichnet, dass** der Spalttopf (9) an seinem dem Boden (8) abgewandten Randbereich (11) flanschlos ist und mit diesem Randbereich (11) eine zu dem Gehäuse der Zahnradpumpe (1) gehörende Zentrierung (12) übergreift und/oder in eine Zentrierung des Gehäuses eingreift und dass der Spalttopf (9) in Gebrauchsstellung mit seinem Boden (8) axial gegen einen Lagerzapfen (13) für das Laufrad (3) und/oder gegen die Sichel (4) angedrückt ist.

2. Zahnradpumpe nach Anspruch 1, **dadurch gekennzeichnet, dass** das Gehäuse einen axial nach innen gerichteten, innerhalb des Spalttopfs (9) verlaufenden Zapfen (14) oder Vorsprung aufweist, der von einem das Hohlrad (2) tragenden, verzahnungsfreien Hohlzylinder (15) drehbar als Lagerstelle übergriffen ist und insbesondere einen axialen Anschlag (15a) für das Hohlrad (2) oder seinen Lagerzylinder aufweist.

3. Zahnradpumpe nach Anspruch 1 oder 2, **dadurch gekennzeichnet, dass** der Hohlzylinder (15) Teil des Rotors (5) ist oder diesen zumindest teilweise bildet.

4. Zahnradpumpe nach einem der Ansprüche 1 bis 3, **dadurch gekennzeichnet, dass** zum Andrücken des Spalttopfs (9) an einen Lagerzapfen (13) für das Laufrad und/oder an eine Sichel (4) ein mit dem Gehäuse insbesondere lösbar verbindbarer Deckel (16) und/oder ein Zwischenstück (17) zwischen diesem Deckel (16) und der Außenseite des Bodens (8) des Spalttopfs (9) vorgesehen ist.

5. Zahnradpumpe nach einem der Ansprüche 1 bis 4, **dadurch gekennzeichnet, dass** an der Stirnseite des flanschlosen Randbereichs (11) des Spalttopfs (9) ein Widerlager, insbesondere ein nachgiebiges Widerlager (19) oder ein Dichtrings vorgesehen ist, welches durch das Andrücken des Spalttopfs (9) gleichzeitig zusammendrückbar ist.

6. Zahnradpumpe nach einem der Ansprüche 1 bis 5, **dadurch gekennzeichnet, dass** der Spalttopf (9) an seinem flanschlosen Randbereich (11) ein Gewinde (20) zum Verschrauben mit einer Zentrierung aufweist und dass das Anziehen des Gewindes dieser Verschraubung auch zum Andrücken des Bodens (8) des Spalttopfs (9) an die Stirnseite des Lagerzapfens (13) des Laufrades und/oder an die Stirnseite der Sichel (4) dient.

7. Zahnradpumpe nach einem der Ansprüche 1 bis 6, **dadurch gekennzeichnet, dass** im Randbereich (11) des Spalttopfs (9), insbesondere innenseitig ein mit einem Gehäuseabschnitt zusammenwirkender Dichtring (21) vorgesehen ist, beispielsweise benachbart zu einem Zentriergewinde.

8. Zahnradpumpe nach einem der Ansprüche 1 bis 7, **dadurch gekennzeichnet, dass** das die Zentrierung (12) für den Spalttopf (9) aufweisende Teil (22) des Gehäuses mit dem übrigen Gehäuse der Zahnradpumpe (1) lösbar verbunden und austauschbar ist.

9. Zahnradpumpe nach einem der Ansprüche 1 bis 8, **dadurch gekennzeichnet, dass** das die Zentrierung (12) aufweisende Gehäuseteil (22) in eine Öffnung des Gehäuses einfügbar und mittels Flansch (25) oder Bajonetteverschluss oder Gewinde oder Steckschrauben (27) mit dem übrigen Gehäuse in Gebrauchsstellung verbunden ist.

10. Zahnradpumpe nach einem der Ansprüche 1 bis 9, **dadurch gekennzeichnet, dass** der Lagerzapfen (13) für das Laufrad (3) mit dem das Hohlrad (2) lagernden Gehäusevorsprung (14) verbunden, insbesondere einstückig verbunden ist.

11. Zahnradpumpe nach einem der Ansprüche 1 bis 10, **dadurch gekennzeichnet, dass** der Lagervorsprung (14) des Gehäuses für das Hohlrad (2) und/oder für das Laufrad (3) zu den Lagerbereichen führende Kanäle (28) oder Bohrungen für ein Schmiermedium aufweist.

12. Zahnradpumpe nach einem der Ansprüche 1 bis 11, **dadurch gekennzeichnet, dass** der flanschlose Spalttopf (9) tiefgezogen ist.

13. Zahnradpumpe nach einem der Ansprüche 1 bis 12, **dadurch gekennzeichnet, dass** die radiale Abmessung der Stirnseite des Spalttopfes (9) zumindest bereichsweise der radialen Dicke dieser Wandung (10) entspricht.

14. Zahnradpumpe nach einem der Ansprüche 1 bis 13, **dadurch gekennzeichnet, dass** die Dicke der Wandung (10) des Spalttopfes mit Abstand zu seinem freien Rand, insbesondere im Bereich des Stators (7), gegenüber der Wandstärke im randnahen Bereich vermindert ist.

## Claims

1. Internal geared wheel pump (1) having at least one ring gear (2) with internal teeth and an impeller (3) with external teeth which meshes therewith, with or without a crescent-shaped member (4), and with an electric drive, which is formed by the fact that the ring gear (2) forms the inside of a rotor (5) of a, more particularly, brushless electric motor or is connected to the rotor (5), and in that adjacent to this rotor (5) is a stator (7), the ring gear (2) and the impeller (3) being screened from the stator (7) by a closed split pot (9) which covers an end face of the impeller (3) and the ring gear (2) with a base (8) and by the wall region (10) thereof which projects relative to the base (8), **characterised in that** the split pot (9) is flangeless at its edge region (11) remote from the base (8) and, with this edge region (11), engages over centring means (12) belonging to the housing of the gear wheel pump (1) and/or engages in centring means of the housing, and **in that** in the position of use the split pot (9) is pressed axially against a bearing pin (13) for the impeller (3) and/or against the crescent-shaped member (4).

2. Geared wheel pump according to claim 1, **characterised in that** the housing comprises an axially inwardly directed pin (14) or projection extending within the split pot (9), over which engages an untoothed hollow cylinder (15) carrying the ring gear (2), to form a rotatable bearing point, and which comprises in particular an axial stop (15a) for the ring gear (2) or its bearing cylinder.

3. Geared wheel pump according to claim 1 or 2, **characterised in that** the hollow cylinder (15) is part of the rotor (5) or at least partly forms the latter.

4. Geared wheel pump according to one of claims 1 to 3, **characterised in that** for pressing the split pot (9) onto a bearing pin (13) for the impeller and/or against a crescent-shaped member (4), a cover (16) is provided which is, in particular, releasably connectable to the housing, and/or an intermediate member (17) is provided between this cover (16) and the exterior of the base (8) of the split pot (9).

5. Geared wheel pump according to one of claims 1 to 4, **characterised in that** on the end face of the flangeless edge region (11) of the split pot (9) is provided an abutment, particularly a flexible abutment (19) or a sealing ring, which can be compressed at the same time by the pressing of the split pot (9).

6. Geared wheel pump according to one of claims 1 to 5, **characterised in that** the split pot (9) comprises, on its flangeless edge region (11), a thread (20) for screwing to centring means and **in that** the tightening of the thread of this screw fitting also serves to press the base (8) of the split pot (9) against the end face of the bearing pin (13) of the impeller and/or the end face of the crescent-shaped member (4).

7. Geared wheel pump according to one of claims 1 to 5, **characterised in that** in the edge region (11) of the split pot (9), particularly on the inside, a sealing ring (21) is provided adjacent to a centring thread, for example, said sealing ring co-operating with a housing portion.

8. Geared wheel pump according to one of claims 1 to 7, **characterised in that** the part (22) of the housing comprising the centring means (12) for the split pot (9) is releasably connected to the remainder of the housing of the geared wheel pump (1) and is replaceable.

9. Geared wheel pump according to one of claims 1 to 8, **characterised in that** the housing part (22) comprising the centring means (12) can be inserted in an opening in the housing and is connected to the remainder of the housing in the position of use by means of a flange (25) or bayonet fitting or thread or fixing screws (27).

10. Geared wheel pump according to one of claims 1 to 9, **characterised in that** the bearing pin (13) for the impeller (3) is connected, particularly integrally connected, to the housing projection (14) which forms the mount for the ring gear (2).

11. Geared wheel pump according to one of claims 1 to 10, **characterised in that** the bearing projection (14) of the housing for the ring gear (2) and/or for the impeller (3) comprises channels (28) leading to the bearing regions or bores for a lubricating medium.

12. Geared wheel pump according to one of claims 1 to 11, **characterised in that** the flangeless split pot (9) is deep-drawn.

13. Geared wheel pump according to one of claims 1 to 12, **characterised in that** the radial dimensions of the end face of the split pot (9) correspond at least in parts to the radial thickness of this wall (10).

14. Geared wheel pump according to one of claims 1 to 13, **characterised in that** the thickness of the wall (10) of the split pot at a spacing from its free edge, particularly in the region of the stator (7), is reduced by comparison with the wall thickness in the region near the edge.

## Revendications

1. Pompe (1) à engrenage interne, comprenant au moins une roue creuse (2) à denture intérieure et une roue de roulement (3) à denture extérieure engrenant dans cette dernière, avec ou sans dépouille arquée (4), et un entraînement électrique dont la formation résulte du fait que la roue creuse (2) matérialise l'espace interne d'un rotor (5) d'un moteur électrique notamment dépourvu de balai, ou est reliée audit rotor (5), et du fait qu'un stator (7) occupe une position voisine de ce rotor (5), la roue creuse (2) et la roue de roulement (3) étant blindées vis-à-vis du stator (7) par une cuvette interstitielle fermée (9) recouvrant, par un fond (8), une face extrême de la roue de roulement (3) et de la roue creuse (2), ainsi que par la zone de paroi (10) de ladite cuvette qui fait saillie par rapport audit fond (8), **caractérisée par le fait que** la cuvette interstitielle (9) est dépourvue de bride dans sa région marginale ou de bord (11) tournée à l'opposé du fond (8) et coiffe et/ou pénètre, par cette région marginale (11), un centrage (12) faisant partie du carter de la pompe (1) à engrenage interne ; et **par le fait que** la cuvette interstitielle (9) est pressée axialement par son fond (8), en position d'utilisation, contre un tourillon (13) affecté à la roue de roulement (3) et/ou contre la dépouille arquée (4).

2. Pompe à engrenage selon la revendication 1, **caractérisée par le fait que** le carter présente un tenon (14) ou une protubérance qui est dirigé(e) axialement vers l'intérieur, s'étend à l'intérieur de la cuvette interstitielle (9), est coiffé(e) de manière tournante par un cylindre creux (15) non denté, portant la roue creuse (2) et agissant comme une zone de portée, et est notamment muni(e) d'une butée axiale (15a) destinée à ladite roue creuse (2) ou à son cylindre de portée.

3. Pompe à engrenage selon la revendication 1 ou 2, **caractérisée par le fait que** le cylindre creux (15) fait partie intégrante du rotor (5) ou forme au moins partiellement ce dernier.

4. Pompe à engrenage selon l'une des revendications 1 à 3, **caractérisée par le fait qu'**un couvercle (16) pouvant être notamment relié au carter de manière libérable, et/ou une pièce intercalaire (17), est prévu(e) entre ce couvercle (16) et la face extérieure du fond (8) de la cuvette interstitielle (9), afin de presser ladite cuvette interstitielle (9) contre un tourillon (13) affecté à la roue de roulement, et/ou contre une dépouille arquée (4).

5. Pompe à engrenage selon l'une des revendications 1 à 4, **caractérisée par le fait qu'**il est prévu, à la face extrême de la région marginale (11) de la cuvette interstitielle (9) qui est dépourvue de bride, une contre-butée revêtant notamment la forme d'une contre-butée souple (19), ou d'une bague d'étanchement pouvant être simultanément comprimée par la pression de contact de ladite cuvette interstitielle (9).

6. Pompe à engrenage selon l'une des revendications 1 à 5, **caractérisée par le fait que** la cuvette interstitielle (9) comporte, dans sa région marginale (11) dépourvue de bride, un filetage (20) conçu pour la solidarisation vissée avec un centrage ; et **par le fait que** le blocage du filetage de cette solidarisation vissée sert également à presser le fond (8) de ladite cuvette interstitielle (9) contre la face extrême du tourillon (13) de la roue de roulement et/ou contre la face extrême de la dépouille arquée (4).

7. Pompe à engrenage selon l'une des revendications 1 à 6, **caractérisée par le fait qu'**une bague d'étanchement (21) coopérant avec un tronçon du carter est prévue dans la région marginale (11) de la cuvette interstitielle (9), en particulier intérieurement, par exemple au voisinage d'un filetage de centrage.

8. Pompe à engrenage selon l'une des revendications 1 à 7, **caractérisée par le fait que** la partie (22) du carter, dotée du centrage (12) destiné à la cuvette interstitielle (9), est reliée amoviblement au reste dudit carter de la pompe (1) à engrenage, et est remplaçable.

9. Pompe à engrenage selon l'une des revendications 1 à 8, **caractérisée par le fait que** la partie (22) du carter, dotée du centrage (12), peut être insérée dans une ouverture dudit carter et est reliée au reste dudit carter, en position d'utilisation, au moyen d'une bride (25), d'une fermeture à baïonnette, d'un filetage ou de tirants (27).

10. Pompe à engrenage selon l'une des revendications 1 à 9, **caractérisée par le fait que** le tourillon (13) affecté à la roue de roulement (3) est relié, notamment d'un seul tenant, à la protubérance (14) du carter qui assure le support de la roue creuse (2).

11. Pompe à engrenage selon l'une des revendications 1 à 10, **caractérisée par le fait que** la protubérance de montage (14) du carter, affectée à la roue creuse (2) et/ou à la roue de roulement (3), présente des canaux (28) ou des perçages dédiés à un agent de lubrification et menant aux zones de portée ou de support.

12. Pompe à engrenage selon l'une des revendications 1 à 11, **caractérisée par le fait que** la cuvette interstitielle (9) dépourvue de bride est venue d'emboutissage profond.

13. Pompe à engrenage selon l'une des revendications 1 à 12, **caractérisée par le fait que** la dimension radiale de la face extrême de la cuvette interstitielle (9) correspond, au moins par zones, à l'épaisseur radiale de la paroi (10) de cette dernière.

14. Pompe à engrenage selon l'une des revendications 1 à 13, **caractérisée par le fait que** l'épaisseur de la paroi (10) de la cuvette interstitielle est diminuée par rapport à l'épaisseur de paroi de la zone proche du bord, à distance de son bord libre, en particulier dans la région du stator (7).
